# DEMANDE DE BREVET EUROPEEN

(11) **EP 2 281 672 A1**
(43) Date de publication de la demande: **09.02.2011**
(21) Numéro de dépôt: 10170900.4
(22) Date de dépôt: 27.07.2010
(51) Int. Cl.: B29C 44/32, H01B 7/285

(54) **Gaine préfilée, procédé et dispositif de fabrication d'une telle gaine**

(30) Priorité: 30.07.2009 FR 0955337
(71) Demandeur: Courant SAS, 01570 Manziat (FR)
(72) Inventeur: Courant, Alain, 01190 Chavannes Sur Reyssouze (FR)
(74) Mandataire: Tetaz, Franck Claude Edouard

(57) **Abrégé**

L'invention concerne une gaine préfilée **caractérisée en ce qu**'elle présente au moins un tronçon obturé par un matériau expansé à cellules fermées.

L'invention concerne également un procédé et un dispositif de fabrication d'une telle gaine.

## Description

### DOMAINE DE L'INVENTION

La présente invention concerne une gaine préfilée ainsi qu'un procédé et un dispositif de fabrication d'une telle gaine.

### ARRIERE PLAN DE L'INVENTION

Les gaines préfilées sont employées dans le secteur du bâtiment pour guider et protéger les fils électriques qui sont installés par exemple à l'intérieur des murs et dans les planchers.

Or, l'air qui est contenu à l'intérieur de ces gaines est susceptible de permettre des transferts de chaleur d'une pièce à l'autre.

L'évolution des normes d'isolation thermique impose maintenant aux installateurs de veiller à la suppression des ponts thermiques.

L'un des buts de la présente invention est donc de concevoir une gaine préfilée évitant la formation de ces ponts thermiques, tout en conservant à la gaine sa souplesse et sa maniabilité.

Un autre but de l'invention est de développer un procédé et un dispositif de fabrication d'une telle gaine qui soit peu onéreux et facile à mettre en oeuvre.

### BREVE DESCRIPTION DE L'INVENTION

Conformément à l'invention, il est proposé une gaine préfilée **caractérisée en ce qu**'elle présente au moins un tronçon obturé par un matériau expansé à cellules fermées.

Ledit matériau expansé constitue un obstacle étanche au passage de l'air et évite ainsi les transferts de chaleur qui pourraient être occasionnés par une circulation d'air à l'intérieur de la gaine.

Selon un premier mode de réalisation de la gaine, ledit tronçon est formé sur l'ensemble de la gaine.

Selon un deuxième mode de réalisation, la gaine comporte une pluralité de tronçons obturés distincts séparés par des intervalles sensiblement équidistants, le matériau expansé constituant des cloisons.

De préférence, lesdits intervalles sont compris entre 20 centimètres et 5 mètres, et/ou l'épaisseur des cloisons est comprise entre 1 centimètre et 1 mètre.

Le matériau expansé est avantageusement choisi parmi les polyoléfines, telles que le polyéthylène basse, moyenne ou haute densité et le polypropylène, ou le PVC.

Un autre objet de l'invention concerne un procédé de fabrication d'une gaine préfilée telle que décrite ci-dessus, ledit procédé étant **caractérisé en ce qu**'il comprend, pendant l'opération d'extrusion de la gaine autour du(des) fil(s), l'injection, à l'intérieur de la gaine, d'une quantité déterminée d'un matériau apte à s'expanser transversalement à la direction d'extrusion de manière à obturer au moins un tronçon de la gaine.

De manière particulièrement avantageuse, l'injection du matériau expansible a lieu à des instants déterminés de sorte à former des cloisons distinctes en matériau expansé.

Enfin, un autre objet de l'invention concerne un dispositif de fabrication d'une gaine préfilée, **caractérisé en ce qu**'il comprend une tête d'extrusion pour extruder la gaine, un moyen pour introduire le(s) fil(s) dans la gaine simultanément à l'extrusion et un moyen pour injecter à l'intérieur de la gaine un matériau apte à s'expanser transversalement à la direction d'extrusion de manière à obturer au moins un tronçon de la gaine.

### BREVE DESCRIPTION DES DESSINS

D'autres caractéristiques et avantages de l'invention ressortiront de la description détaillée qui va suivre, en référence aux dessins annexés sur lesquels :
- la figure 1 est une vue en coupe schématique d'une gaine préfilée conforme à l'invention,
- la figure 2 illustre une coupe de l'embout d'une tête d'extrusion permettant la fabrication de la gaine préfilée conforme à l'invention,
- la figure 3 illustre une coupe de principe d'une tête d'extrusion permettant la mise en oeuvre de l'invention.

### DESCRIPTION DETAILLEE DE L'INVENTION

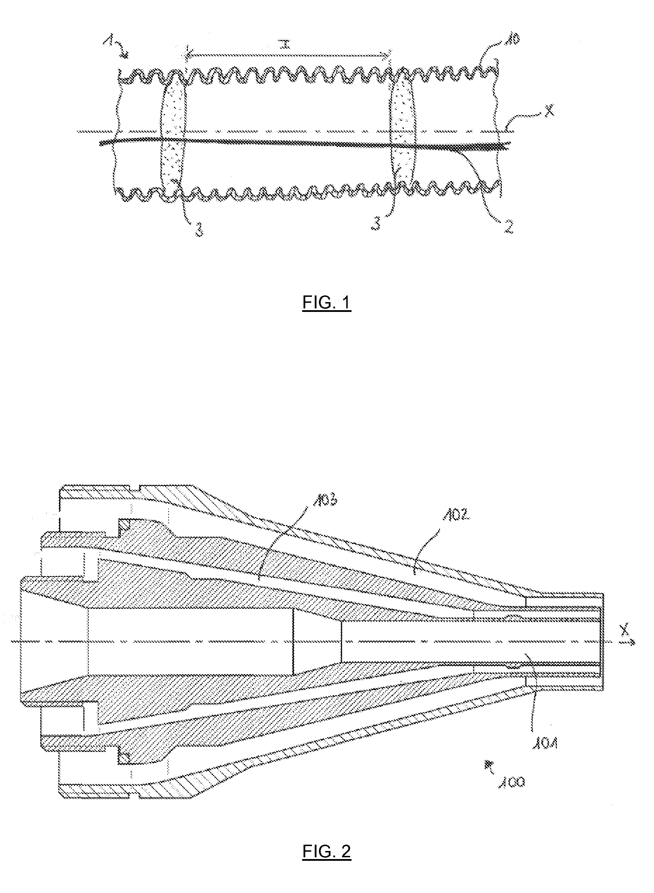

En référence à la figure 1, la gaine préfilée 1 comporte une paroi 10 généralement annelée, obtenue par extrusion puis formage pour obtenir le profil d'annelure souhaité.

Les procédés d'extrusion et de formage sont connus en eux-mêmes et ne seront donc pas décrits en détail ici.

La gaine 1 renferme un ou plusieurs fils électriques 2, qui sont introduits dans la gaine 1 simultanément à l'extrusion.

Des dispositifs de préfilage existent sur le marché et sont commercialisés notamment par la société CORELCO. Ils ne seront donc décrits ici que succinctement.

Un dispositif de préfilage comporte une tête d'extrusion munie à son extrémité d'un embout agencé de sorte à extruder une paraison de diamètre et d'épaisseur déterminées, ainsi qu'un moyen d'amenée des fils ou câbles à préfiler.

La tête d'extrusion est alimentée en matériau thermoplastique à l'état fluide par une extrudeuse.

La tête d'extrusion et son embout doivent permettre le passage, dans leur partie centrale, des fils ou câbles électriques à préfiler.

Cette contrainte suppose que l'extrudeuse ne soit pas coaxiale avec l'axe d'extrusion de la paraison, mais qu'elle soit parallèle déportée par rapport à cet axe ou bien orientée par rapport à celui-ci avec un angle (par exemple, 30, 45 ou 90°) qui permette de libérer l'arrière de la tête d'extrusion pour l'amenée des câbles.

Selon un premier mode de réalisation de l'invention (non illustré), la gaine est remplie d'un matériau expansé qui va être décrit plus bas.

Selon un mode de réalisation préféré, illustré à la figure 1, la gaine 1 renferme une pluralité de cloisons 3, disposées à des intervalles réguliers 1, transversalement à l'axe longitudinal X de la gaine.

On précise ici que les dimensions respectives des annelures, du fil électrique, des cloisons et du diamètre de la gaine n'ont pas été respectées afin de faciliter la compréhension de la figure 1.

Les cloisons 3 sont réalisées en un matériau expansé, tel qu'une mousse, choisi parmi les matériaux possédant les propriétés de ne pas propager les flammes, de ne pas couler et d'être imperméable à l'eau, à l'humidité et à l'air.

De préférence on utilise le polyéthylène basse densité (PEBD) ou haute densité (PEHD), d'autres types de polyoléfines (tel que du polypropylène (PP)), voire du PVC.

Le matériau constituant les cloisons - ou, le cas échéant, remplissant la gaine - peut être le même matériau que celui constituant la gaine, dans lequel on injecte un gaz (par exemple du CO₂) ou auquel on ajoute un agent d'expansion.

Les cloisons 3 étant imperméables à l'air, elles empêchent les transferts de chaleur par l'intermédiaire de celui-ci le long de la gaine.

L'intervalle I entre deux cloisons successives sera choisi suffisamment faible pour ne pas procurer de volumes d'air trop importants, mais suffisamment grand pour ne pas nuire à la souplesse de la gaine, celle-ci étant destinée à être conditionnée sous forme de rouleaux. Par ailleurs, la souplesse est également recherchée pour faciliter la pose de la gaine.

Par exemple, un intervalle I de l'ordre d'1 mètre est considéré comme adéquat, mais il peut être compris entre 20 centimètres et 5 mètres selon les cas.

En outre, l'épaisseur des cloisons doit également être suffisamment fine pour ne pas rigidifier localement la gaine dans une mesure trop importante, tout en formant une barrière à l'air.

Il devra donc s'agir d'une mousse à cellules fermées.

Ainsi, on choisira de préférence du PEBD dont la densité est choisie en fonction d'un compromis entre le poids par mètre, la quantité de gaz ou d'agent d'expansion par mètre, le nombre de cloisons par mètre et le coût final souhaité.

L'épaisseur des cloisons peut être comprise entre 1 centimètre et 1 mètre.

La gaine 1 peut être obtenue par tout procédé approprié permettant l'injection, à intervalles réguliers, d'une quantité déterminée de matériau apte à s'expanser transversalement pour former une cloison 3.

Selon un mode particulier de l'invention, on utilise une tête d'extrusion comportant une filière pour l'extrusion de la gaine 1 et un passage adapté pour injecter le matériau expansible à l'intérieur de la gaine.

La figure 2 illustre un embout 100 comprenant un passage central 101 pour les fils électriques, une filière 102 pour l'extrusion de la paraison ainsi qu'un passage 103, disposé entre les passages 100 et 102, pour injecter le matériau expansible à l'intérieur de la paraison. Le sens d'extrusion de la paraison est représenté par la flèche X.

Chacun des passages 102 et 103 est alimenté par une extrudeuse respective.

Par ailleurs, la tête d'extrusion comporte, dans l'embout 100 ou en amont de celui-ci, un moyen de fermeture (non représenté ici) du passage 103 pour permettre un arrêt instantané de l'extrusion du matériau expansible.

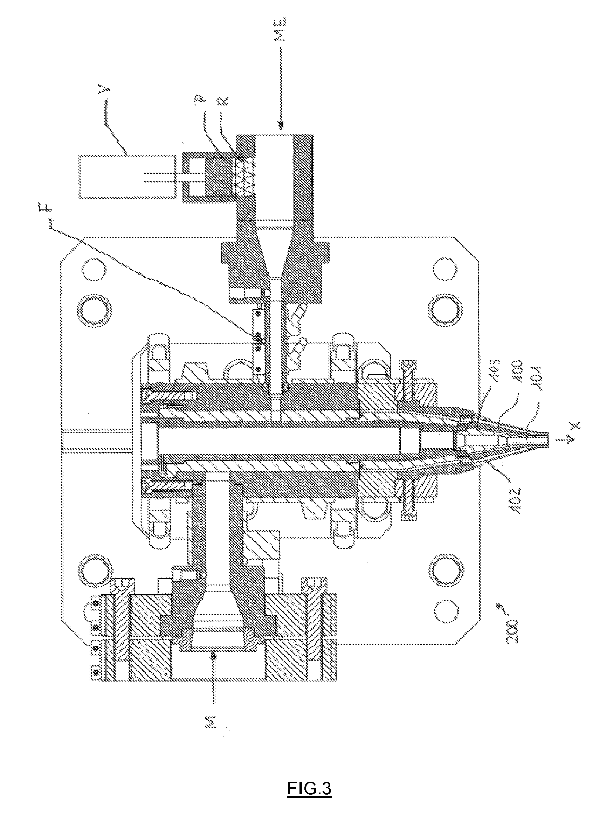

La figure 3 présente une section de principe d'une tête d'extrusion 200 permettant la mise en oeuvre de l'invention.

L'extrudeuse (non représentée) contenant le matériau de la gaine fonctionne en continu et alimente la tête d'extrusion par un canal repéré par la flèche M.

L'extrudeuse (non représentée) contenant le matériau expansible alimente la tête d'extrusion par un canal repéré par la flèche ME.

Dans le cas où la totalité de la gaine est remplie de matériau expansé, la tête d'extrusion correspondante fonctionne en continu.

En ce qui concerne l'injection d'une quantité déterminée de matériau expansible à l'intérieur de la gaine, en vue de former des cloisons distinctes, différents moyens sont envisageables.

Selon une première possibilité, l'injection du matériau expansible à l'intérieur de la gaine est simplement commandée par des cycles de marche/arrêt de l'extrudeuse correspondante.

Selon une deuxième possibilité, on crée dans le circuit du matériau expansible une chambre de stockage R de la mousse et on installe dans le passage prévu pour le matériau expansible un obturateur commandant l'ouverture et la fermeture du passage.

Ainsi, l'extrudeuse contenant le matériau expansible fonctionne en continu, mais, lorsque le passage est fermé par l'obturateur, le matériau est stocké dans la chambre. Avantageusement, le dispositif comporte un moyen, par exemple un vérin V actionnant un piston P pour réinjecter le contenu de la chambre à l'intérieur de la gaine au moment voulu.

Selon une troisième possibilité, on ménage (à l'endroit marqué par le repère F) dans le conduit reliant l'extrudeuse à la tête d'extrusion une ouverture permettant une fuite contrôlée du matériau expansible, en vue d'éviter la montée en pression dans l'extrudeuse lorsqu'elle est arrêtée.

Il va de soi que les exemples que l'on vient de donner ne sont que des illustrations particulières en aucun cas limitatives quant aux domaines d'application de l'invention.

## Revendications

1. Gaine préfilée, **caractérisée en ce qu'**elle présente au moins un tronçon obturé par un matériau expansé à cellules fermées.

2. Gaine selon la revendication 1, **caractérisée en ce qu'**elle comporte une pluralité de tronçons obturés distincts séparés par des intervalles (I) sensiblement équidistants, le matériau expansé constituant des cloisons (3).

3. Gaine selon la revendication 2, **caractérisée en ce que** lesdits intervalles (I) sont compris entre 20 centimètres et 5 mètres.

4. Gaine selon l'une des revendications 2 ou 3, **caractérisée en ce que** l'épaisseur des cloisons (3) est comprise entre 1 centimètre et 1 mètre.

5. Gaine selon la revendication 1, **caractérisée en ce que** ledit tronçon est formé sur l'ensemble de la gaine.

6. Gaine selon l'une des revendications 1 à 5, **caractérisée en ce que** le matériau expansé est choisi parmi les polyoléfines, telles que le polyéthylène basse, moyenne ou haute densité et le polypropylène, ou le PVC.

7. Procédé de fabrication d'une gaine préfilée (1) selon l'une des revendications 1 à 4, **caractérisé en ce qu'**il comprend, pendant l'opération d'extrusion de la gaine autour du(des) fil(s) (2), l'injection, à l'intérieur de la gaine (1), d'une quantité déterminée d'un matériau apte à s'expanser transversalement à la direction d'extrusion de manière à obturer au moins un tronçon de la gaine.

8. Procédé selon la revendication 7, **caractérisé en ce que** l'injection du matériau expansible a lieu à des instants déterminés de sorte à former des cloisons (3) distinctes en matériau expansé.

9. Dispositif de fabrication d'une gaine préfilée (1), **caractérisé en ce qu'**il comprend une tête d'extrusion pour extruder la gaine (1), un moyen pour introduire le(s) fil(s) (2) dans la gaine (1) simultanément à l'extrusion et un moyen pour injecter à l'intérieur de la gaine un matériau apte à s'expanser transversalement à la direction d'extrusion de manière à obturer au moins un tronçon de la gaine.
